# EUROPEAN PATENT SPECIFICATION

(11) **EP 4 079 987 B1**
(45) Date of publication and mention of the grant of the patent: **17.09.2025**
(21) Application number: 22169556.2
(22) Date of filing: 22.04.2022
(51) Int. Cl.: E04D 3/35, B21D 13/04, E04D 3/30

(54) **SHEET AS WELL AS PROCESS LINE AND METHOD FOR OBTAINING THE SAME**
BLECH SOWIE PROCESSLINIE UND VERFAHREN ZUR HERSTELLUNG EINES SOLCHES BLECHS
TÔLE AINSI QUE LIGNE DE FABRICATION ET PROCÉDÉ POUR L'OBTENIR

(30) Priority: 22.04.2021 IT 202100010271
(43) Date of publication of application: 26.10.2022
(73) Proprietor: Isopan S.p.A., 37135 Verona (IT)
(72) Inventor: GUERRINI, Luigi, 37135 Verona (IT)
(74) Representative: Feltrinelli, Secondo Andrea

(56) References cited:
- DE-A1- 10 039 009
- DE-C- 240 269
- DE-C- 591 701
- JP-A- H0 377 730
- US-A1- 2009 202 856

## Description

### TECHNICAL FIELD OF THE INVENTION

The present invention relates to a cladding or covering sheet for roofs, for example a sandwich panel, as well as a line for obtaining such sheet. The present invention also relates to a method for obtaining such a sheet.

### STATE OF THE PRIOR ART

Many cladding sheets have been proposed which differ from each other for configuration, thickness and also obtaining materials. One example of a roof metal sheet is known from DE 591 701 C.

Clearly, the sheets must meet specific mechanical requirements, although sometimes it is necessary that the sheets also have a pleasant appearance, naturally depending on the place of installation.

With specific reference to the mechanical requirements, if the sheet should be connected to a layer of insulating material, it is not always possible to obtain a satisfactory constraint.

In any case, it is often necessary to accept sheets which actually constitute a compromise between the needs that arise from time to time.

### OBJECTS OF THE INVENTION

An object of the present invention is to provide a new cladding or covering sheet for roofs or walls, in particular a sheet that can be used alone or as the face of a panel or as the internal side of a covering.

Another object of the present invention is to provide a sheet which ensures an improved adhesion to an insulating layer, in particular made of polyurethane.

Another object of the present invention is to provide a sheet that ensures an improvement in mechanical performance with respect to traditional sheets.

Another object of the present invention is to provide a sheet which is aesthetically pleasing.

Another object of the present invention is to provide a line and a method for obtaining a sheet as indicated above.

Another object of the present invention is to provide a line and a method for obtaining a sheet as indicated above in a simple and rapid manner.

According to an aspect of the invention, a sheet according to claim 1 is provided.

The dependent claims refer to preferred and advantageous embodiments of the invention.

### BRIEF DESCRIPTION OF THE DRAWINGS

Other features and advantages of the invention will be more evident from the description of an embodiment of a sheet and a line, illustrated as an indication in the accompanying drawings in which:

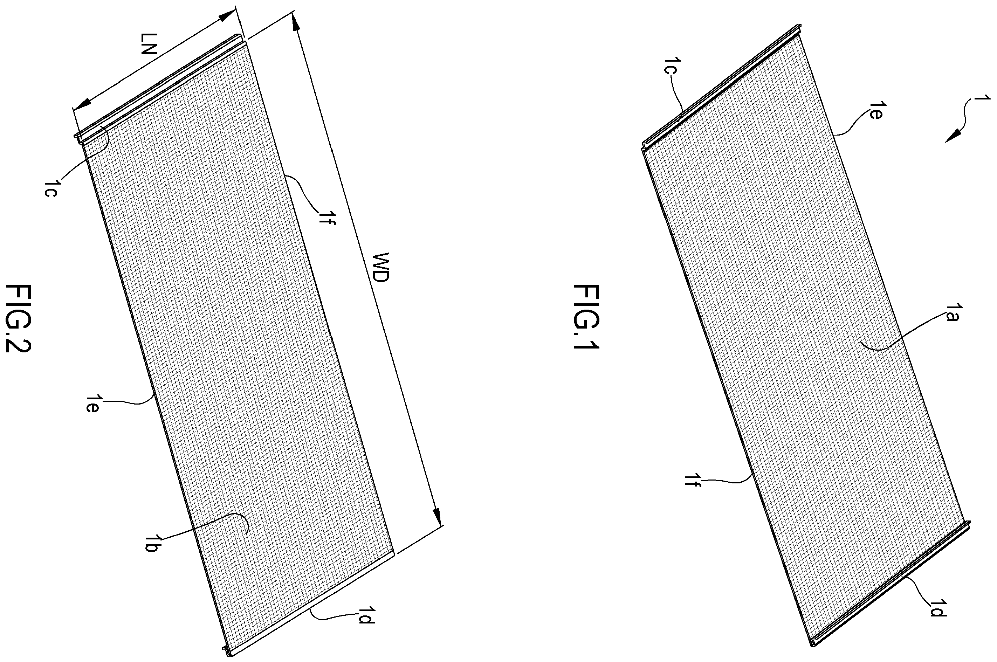

- figures 1 and 2 are perspective views slightly from above and below of a sheet according to the present invention,

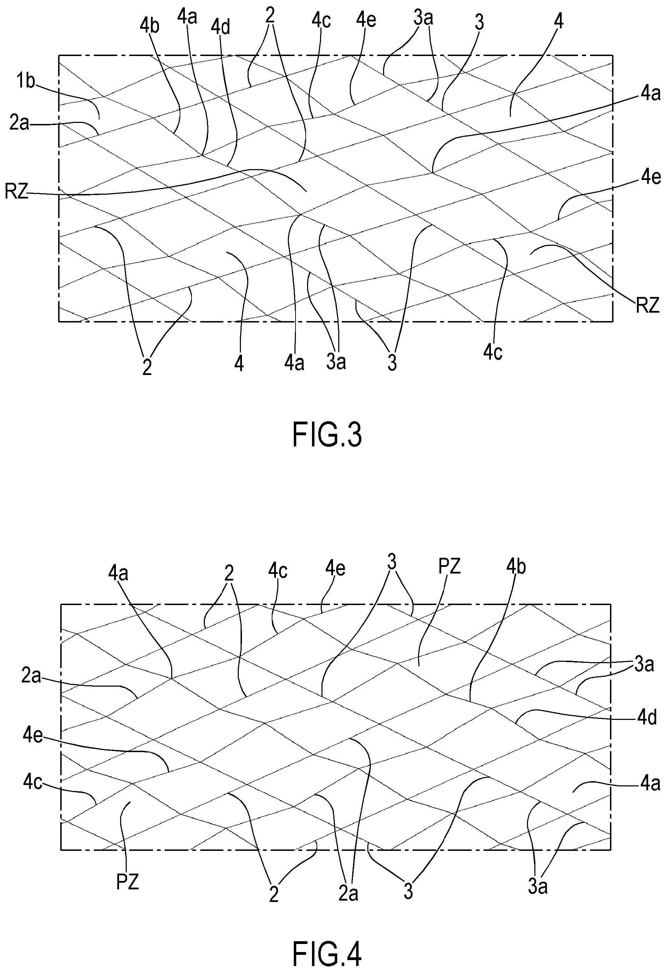

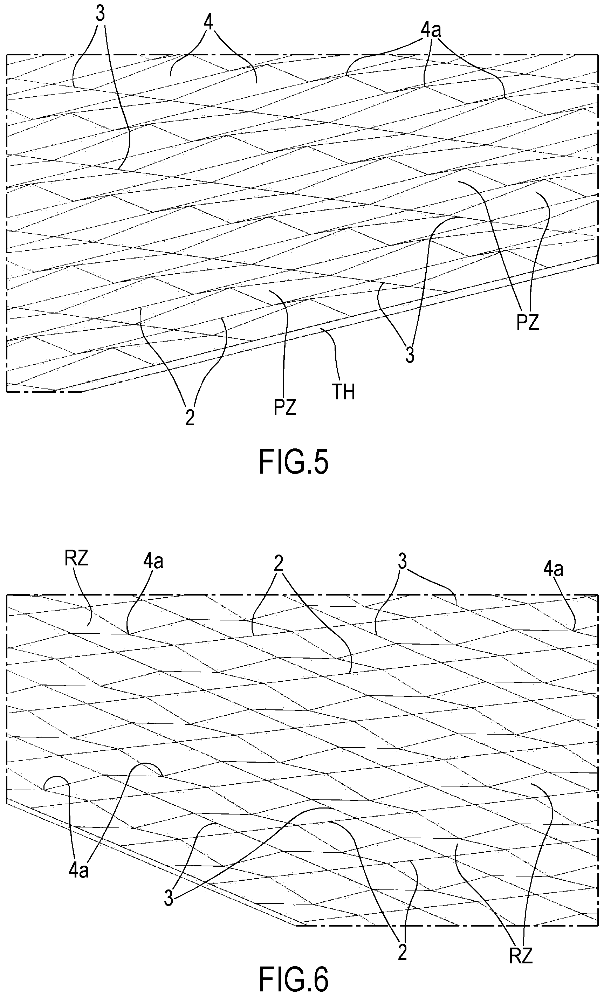

- figures 3 to 6 are views of respective details on an enlarged scale of the sheet of figure 1,

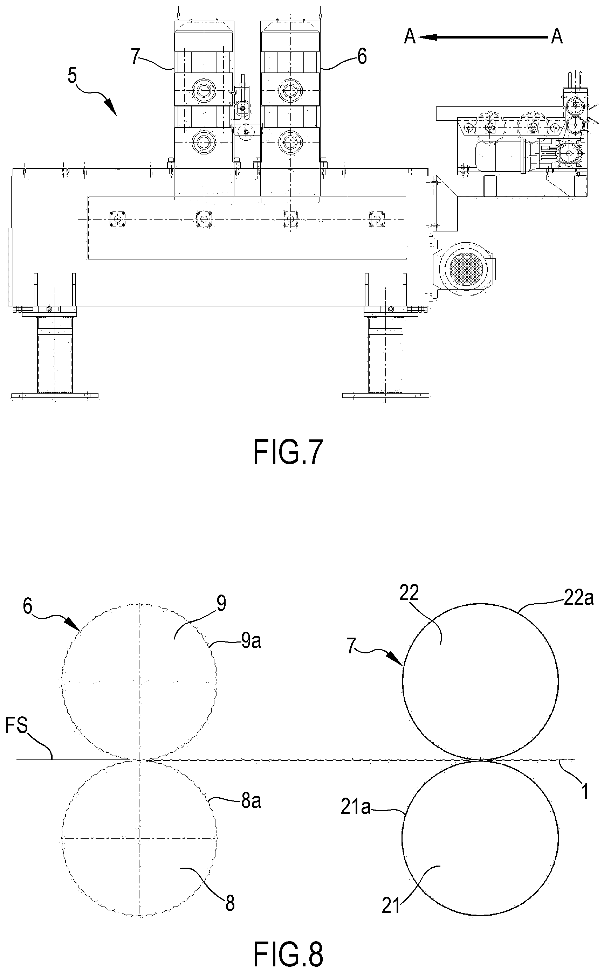

- figure 7 is a schematic side view of a line according to the present invention,
- figure 8 is a schematic view of the workings imparted to a sheet in a line according to the present invention,

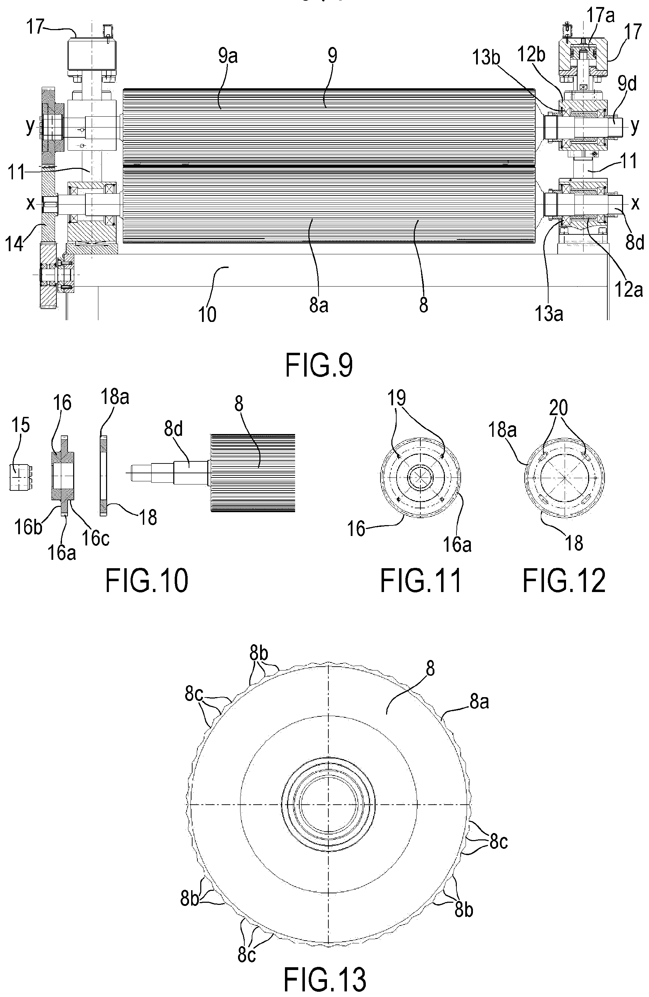

- figure 9 is a front view of a first station of a line according to the present invention,
- figure 10 is an exploded view of some components of the station of figure 9,
- figure 11 is a front view of a gear or toothed wheel of the first station of figure 9,
- figure 12 is a front view of an auxiliary half gear or toothed wheel of the first station of figure 9,
- figure 13 is a front view on an enlarged scale of a roller of the station of figure 9,

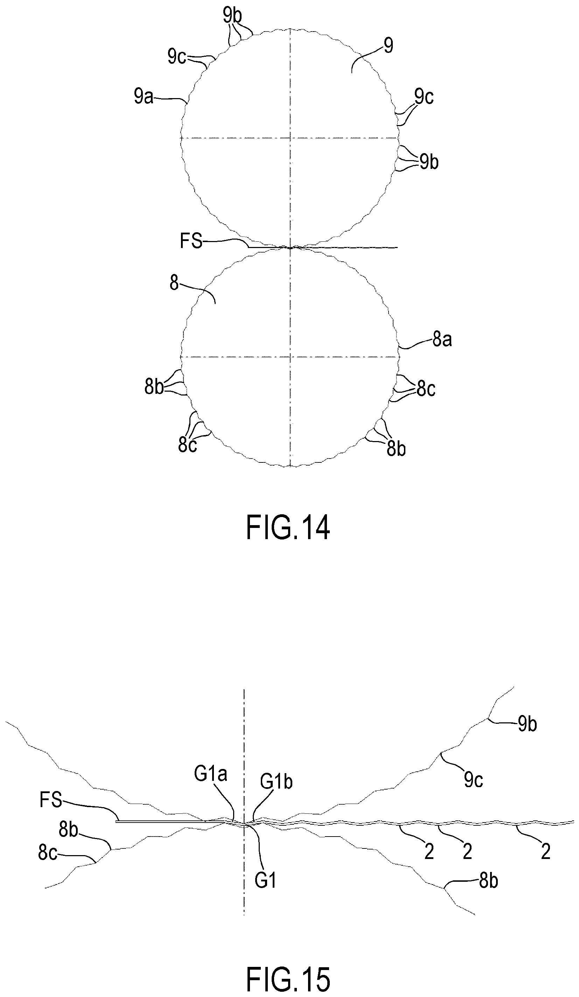

- figure 14 is a front view showing two rollers of the station of figure 9 during the shaping of a sheet,
- figure 15 illustrates a detail on an enlarged scale of figure 14,

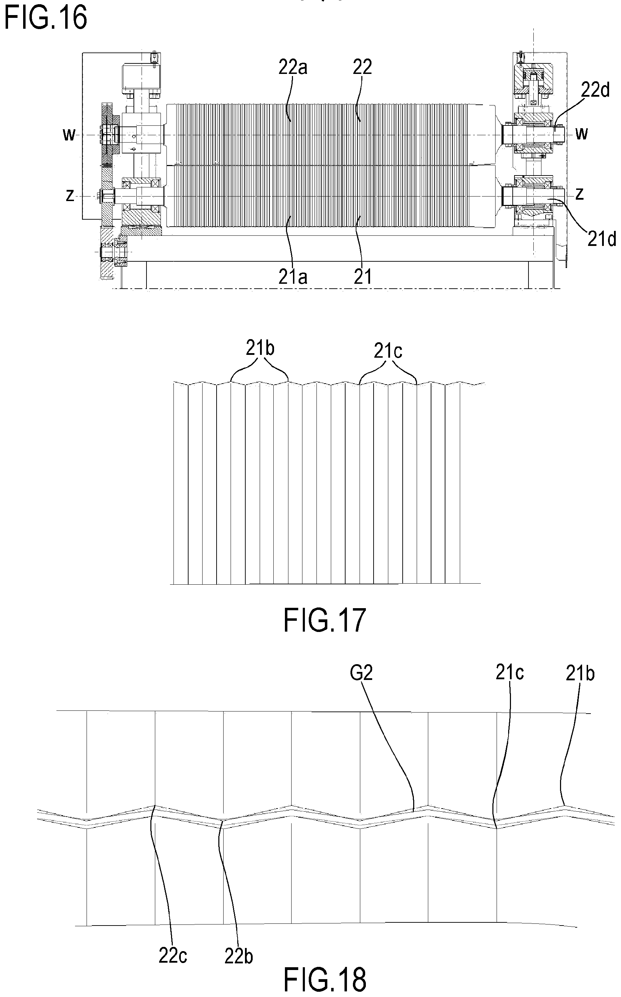

- figure 16 is a front view showing two rollers of a second station of a line according to the present invention during the shaping step of a sheet,
- figures 17 and 18 illustrate respective details on an enlarged scale of figure 16.

In the accompanying drawings, identical parts or components are indicated by the same reference numbers.

### EMBODIMENTS OF THE INVENTION

With reference to the attached figures, a cladding or covering sheet 1 for roofs or walls has been illustrated, in particular a sheet that can be used alone or as the face of a panel or as the internal side of a covering.

The sheet 1 comprises an external face 1a and an internal face 1b and of course an edge section, which can include or define the sides 1c, 1d of the sheet 1 as well as the front edge section 1e and the rear edge section 1f.

The sheet 1 naturally has a width WD, a length LN and a thickness TH, the width WD and the length LN being the main dimensions defining a main extension plane of the sheet 1. In this regard, the external 1a and internal 1b faces define the width WD and the length LN of the sheet 1, while the edge 1c-1f defines the thickness TH.

The width WD and length LN of the sheet can be any suitable size.

The metal sheet 1 according to the invention has a thickness between 0.3 and 1.2mm, if desired between 0.4 and 1mm. It preferably has a constant thickness TH.

The sheet can be made of any suitable material, for example of steel, if desired galvanized, pre-painted, stainless steel, or of pre-painted or natural aluminum or of copper.

Moreover, the sheet 1 comprises a plurality, for example between 10 and 80, if desired between 18 and 30 or between 50 and 80, of first fold lines or ribs 2 spaced apart with each other, each first line 2 extending or developing, clearly for its entire extension, in a respective direction lying in a plane defined by the width WD and the length LN, advantageously in the direction of the width WD.

Also provided in the sheet 1 are a plurality of second fold lines or ribs 3, for example between 10 and 80, if desired between 18 and 30 or between 50 and 80, spaced apart with each other, each second line 3 extending or developing, clearly for its entire extension, in a respective direction lying in a plane defined by the width WD and the length LN, advantageously in the direction of the length LN, which second lines 3 are incident or intersect the plurality of first fold lines or ribs 2. The first fold lines 2 are preferably orthogonal to the second fold lines 3.

Advantageously, the first fold lines 2 are straight and parallel to each other and also the second fold lines 3 are straight and parallel to each other.

Even more advantageously, the first fold lines 2 all lie in the same plane and the second fold lines 3 also all lie in this plane.

Preferably, the first fold lines or ribs 2 define a recessed area in the same first face 1a and a protruding area in the other or second face 1b of the sheet 1.

With reference to this aspect, all the first fold lines preferably affect or engage the sheet 1 so as to fold it in the direction from one face to the other, for example from the external face 1a to the internal face 1b.

Preferably, the second fold lines or ribs 3 define a recessed area in the same first face 1a and a protruding area in the other or second face 1b of the sheet 1.

Even more preferably, the first 2 and second 3 lines define a recessed area in the same first face 1a and a protruding area in the other or second face 1b of the sheet 1.

With reference to this aspect, the second fold lines 3 affect or engage the sheet 1 so as to fold it in the direction from one face to the other, for example from the external face 1a to the internal face 1b.

Therefore, it will be understood that the sheet 1 can advantageously have a first series 2 of fold lines running parallel to a first direction and a second series 3 of fold lines running parallel to a second direction, the two directions being preferably orthogonal to each other and moreover that for each direction of folding, the sheet can be folded in the direction from one face to the other, for example from the external face 1a to the internal face 1b.

With reference to this aspect, as already indicated in part, by folding a sheet 1, the sections of the latter defining the fold line 2, 3 delimit among them an angle greater than 180° on one face of the sheet and on the other an angle smaller than 180° conjugated thereto, at least in the portions of the fold lines 2, 3 that do not intersect or incident other fold lines 3, 2.

In this regard, a sheet 1 according to the present invention has fold lines 2, 3 that intersect or incident each other, so that in the areas of intersection of fold lines 2 and 3 the sheet 1 is folded so as not to define an angle greater or less than 180° as now indicated.

Advantageously, the sheet parts 4 defined between two adjacent and subsequent first fold lines 2 and between two adjacent and subsequent second fold lines 3 have a substantially pyramidal or polygonal mesh configuration, for example with vertex or vertex zone 4a substantially in the center of the respective sheet part 4, if desired equidistant from the two respective first fold lines 2 as well as, if desired equidistant from the two respective second fold lines 3, so as to define a recessed zone RZ in a face 1b of the sheet 1, in particular the face where the fold lines 2, 3 define a protruding area as well as (so as to define) a protruding zone PZ in the other face 1a.

Preferably, all the sheet parts 4 between two adjacent and subsequent first fold lines 2 and between two adjacent and subsequent second fold lines 3 define a recessed zone RZ in the same face 1b of the sheet 1.

According to the non-limiting embodiment illustrated in the figures, in some or each part of sheet 4 between two first adjacent and subsequent fold lines 2 and between two adjacent and subsequent second fold lines 3, four fold sections 4b, 4c, 4d, 4e are defined, that are preferably straight, which each extend from the vertex or vertex zone 4a to a respective segment 2a, 3a of a respective fold line 2, 3 defining the respective sheet part 4.

The segments 2a of each first fold line 2 are the portions of this fold line 2 which extend between two adjacent and subsequent second fold lines 3 intersecting said first fold line 2.

The segment 3a of each second fold line 2 are instead the portions of this fold line 3 which extend between two adjacent and subsequent first fold lines 2 intersecting said second fold line 3.

If desired, for some or each part of sheet 4, two first fold sections 4b, 4d lie in a plane, preferably orthogonal to the main extension of the sheet 1, which is parallel to as well as intermediate between the planes (preferably always orthogonal to the main extension of the sheet 1) where the two fold lines or ribs 2 defining the respective part of the sheet 4 lay.

Even more advantageously, two first fold sections 4b, 4d lie in a plane which is equidistant from the lying plane of the two fold lines or ribs 2 defining the respective sheet part 4.

Preferably, the two first fold sections 4b, 4d are inclined with respect to each other so as to define an angle, in the respective plane orthogonal to the main extension of the sheet 1 where they lie, if desired greater than 180°, for example between 190° and 260°, if desired between 190° and 210° identifiable on one face 1a of the sheet 1, and an acute angle conjugated thereto, for example between 170° and 100°, if desired between 170° and 150° identifiable on the other face 1b of sheet 1.

The other two fold portions or second fold portions 4c, 4e can instead lie in a plane, preferably orthogonal to the main extension of the sheet 1, which is intermediate between and if desired equidistant from the planes (preferably always orthogonal to the main extension of the sheet 1) where two second fold lines or ribs 3 defining the respective sheet part 4 lie.

Preferably, the two second fold sections 4c, 4e are inclined with respect to each other so as to define an angle, in the respective plane orthogonal to the main extension of the sheet 1 where they lie, if desired greater than 180°, for example between 190° and 260°, if desired between 190° and 210° identifiable on one face 1a of the sheet 1, and an acute angle conjugated thereto, for example between 170° and 100°, if desired between 170° and 150° identifiable on the other face 1b of sheet 1.

According to the non-limiting embodiment illustrated in the figures, the sheet parts 4 between two first adjacent and subsequent fold lines 2 and between two adjacent and subsequent second fold lines 3 have a substantially pyramidal configuration with four wall sections between them inclined each defined by a length of a first fold line 2, a length of a second fold line 3, a first fold section 4b or 4d and a second fold section 4c or 4e.

In accordance with the non-limiting embodiment illustrated in the figures, the sheet 1 has thus first fold lines or ribs 2 and second fold lines or ribs 3 and therefore a plurality of sheet parts 4 defined between two first fold lines 2 adjacent and subsequent and between two second adjacent and subsequent fold lines 3, which sheet parts 4 actually protrude or in any case project with respect to the fold lines 2, 3.

If desired, the first fold lines or ribs 2 and the second fold lines or ribs 3 preferably all extend in the same first plane, while the sheet parts 4 all extend or protrude in the same direction starting from the fold lines 2, 3 and between them.

In this case, the vertices or vertex zone 4a are substantially aligned in the same second plane at a distance from the first plane.

According to the invention, the fold lines 2, 3 have a depth between 0.5 and 2 mm, for example 0.7-0.9 mm.

By "depth" it is clearly meant the distance between the first plane defined by the fold lines 2, 3 and the second plane defined by the vertices 4a.

According to the invention, one or more pairs of adjacent and subsequent first fold lines 2 and/or of adjacent and subsequent second fold lines 3 are at a distance one from the adjacent or from each of the adjacent ones between about 10 and about 20 mm or between about 40 and about 50 mm.

Preferably, the distance between the first adjacent and subsequent fold lines 2 is substantially the same as that between the adjacent and subsequent second fold lines 3.

Clearly, a sheet 1 according to the present invention can have the configuration indicated above for most of its extension, for example more than 70%, 80% or 90%, while the remaining part may not be shaped as above indicated.

In this regard, the sheet 1 could have respective sides or flanks 1c, 1d suitably shaped for an interlocking constraint or even only resting with/on sheets, in use, next to and adjacent to it.

So far as the front edge section 1e and the rear edge section 1f are concerned, they could be straight or in any case not shaped except in the stations 6 and 7, which will be discussed later.

In accordance with the present invention, a sandwich panel is also provided, for example with a support or insulating first layer or main block (not shown in the figures), if desired in mineral wool, expanded polyurethane or rigid expanded foam in general or in glass wool, as well as at least a first metal sheet 1 applied or adhered to at least one external, in use, or, if desired, also internal face, of the first main support layer. If desired, a second sheet is also applied or adhered to the other external or internal, in use, face of the first main support layer.

Moreover, the first layer could also comprise coupled sub-layers, each made of a respective material.

If the first layer is made of expanded polyurethane or other expandable component, then the bond between the first layer and the sheet 1 could be obtained by adhesion following the expansion of the polyurethane or expandable component close to the first sheet 1 before the final hardening or solidification of the polyurethane or expandable component.

In this case, the insulating layer, in particular in the case in which it comprises polyurethane or an expandable component, is in contact with the internal face 1b where the recessed zones RZ are defined.

More specifically, in this case, the insulating layer actually fills, following the respective expansion, these recessed zones RZ and, at them, it is in continuous contact with the internal, in use, face 1b of the sheet 1 for all or most (at least 60%, 70%, 80% or 90%) of that face.

If a non-expandable component is used, such as for example wool, if desired mineral or glass wool, this is preferably bonded to the sheet by means of glue.

As will be understood, the configuration of the recessed zones RZ improves the adhesion of the first layer to the sheet 1.

The present invention also relates to a line 5 for processing sheets 1, which line 5 comprises at least a first shaping station 6 arranged to deform the flat sheets 1 so as to form on the latter first fold lines 2 which extend in all or partially orthogonally to the direction of advancement A-A of the sheets 1 in the line 5 and at least a second shaping station 7 arranged to deform the sheets 1 so as to form second fold lines 3, which extend in whole or in part parallel to the direction of advancement A-A of sheets 1 in line 5.

If desired, the sheet or sheets 1 are fed into the line 5 with the width WD perpendicular to the direction of advancement A-A and length LN substantially parallel to the direction of advancement A-A.

In this regard, the first shaping station 6 can comprise at least a first pair of rollers 8, 9 mounted for rotation each around a respective axis of rotation x-x, y-y, a lower roller 8 and an upper roller 9, among which rollers the sheet or sheets 1 can be fed. The rollers 8, 9 are preferably arranged with an axis of rotation x-x, y-y orthogonal to the direction of advancement A-A of the sheets through the first station 5.

Each of the rollers 8, 9 comprises an external shaping surface 8a, 9a that is tubular and knurled or toothed with parallel lines or teeth parallel to the axis x-x, y-y of the respective roller 8, 9, i.e. an external surface 8a, 9a whose distance from the axis of rotation x-x, y-y of the respective roller 8, 9 varies in the passage around the axis x-x, y-y itself of the roller 8, 9. Therefore, the rollers 8, 9 are substantially configured as a toothed wheel.

Preferably, the external surface 8a of the lower roller 8 is configured as the external surface 9a of the upper roller 9 and these surfaces have substantially corresponding dimensions.

Basically, the external surface 8a, 9a of each roller 8, 9 has, in the direction of rotation or passage around the axis x-x, y-y of the respective roller 8, 9, first protruding straight zones 8b, 9b alternating with second recessed straight zones 8c, 9c.

The first straight zones 8b, 9b are actually aligned along a first ideal cylinder, which is at a distance greater from the axis x-x, y-y (or has a diameter greater with respect to the axis), while the second straight zones 8c, 9c are in fact aligned along a second ideal cylinder at a distance shorter from the axis of rotation x-x, y-y (or have a diameter with respect to the axis).

In this case, the first protruding straight areas 8b, 9b and the second recessed straight areas 8c, 9c are parallel to the rotation axis of the respective roller 2, 3.

If desired, the distance of the external surface 8a, 9a of each roller 8, 9 from the axis of rotation x-x, y-y of the same gradually decreases in the passage from each first straight zone 8b, 9b to the adjacent second straight zone 8c, 9c.

In this regard, the teeth of each roller 8, 9 are delimited between two adjacent and successive second recessed straight zones 8c, 9c and comprise the section that extends from a second recessed zone 8c, 9c to a first protruding straight zone 8b, 9b (intermediate between the two second straight zones 8c, 9c) and then from the latter to the other second recessed straight zone 8c, 9c.

Basically, the external surface 8a, 9a of each roller 8, 9, starting from a first straight zone 8b, 9b and moving substantially circumferentially or in any case around the respective axis of rotation x-x, y-y, has a zone of gradual reduction of the distance from the axis x-x, y-y up to a second recessed straight area 8c, 9c, then a zone of gradual increase in the distance from the axis x-x, y-y up to an adjacent first straight area 8b, 9b protruding which is followed by another zone of gradual reduction of the distance from the axis x-x, y-y and then another second zone 8c, 9c recessed straight and so on until returning (once a complete revolution around the axis x-x, y-y has been completed) to the starting first straight zone 8b, 9b.

The two rollers 8 and 9 are positioned one 9 above the other 8 with rotation axes, which are parallel and preferably lying in the same vertical plane, with the top, each time, section of the lower roller 8 in engagement, preferably, without contact with a bottom, each time, section of the upper roller 9 so as to define a first gap or imprint G1 between them for the passage and dragging of the sheets to be shaped.

More specifically, the gap G1 is defined in succession, following the rotation of the rollers 8, 9, first between a protruding zone 8b of the lower roller 8 and a recessed zone 9c of the upper roller 9 in which this protruding zone 8b is partially inserted without contact with the upper roller 9, then by the partial insertion without contact of a protruding zone 9b of the upper roller 9 in a recessed zone 8c of the lower roller 8, then by the partial insertion without contact of another protruding zone 8b of the lower roller 8 in another recessed zone 9c of the upper roller 9 and so on.

Clearly, the two rollers 8 and 9 are positioned or can be positioned so that by making them rotate (for example one motorized and the other idle or driven or, if desired, both motorized), the knurling or the teeth of the external surface 8a engage continuously, preferably without contact the knurling or teeth of the outer surface 9a. More particularly, during the rotation of the rollers 8, 9 a knurling section or one or more upper, in use, teeth of the outer surface 8a of the lower roller 8 is in engagement, preferably without contact, with a knurling section or one or more lower, in use, teeth of the outer surface 9a of the upper roller 9 so as to suitably shape and fold, according to the first fold lines 2, a sheet 1 which is fed between them.

This expedient ensures that a sheet which passes between the two rollers 8, 9 is suitably fold along the first fold lines 2, according to the engagement zones of the external surfaces 8a, 9a.

So far as the expression "non-contact engagement" is concerned, it is understood that during the rotation of the rollers 8, 9, protruding zones at the top of the lower roller 8 are inserted in an area defined by the bottom recessed zones of the upper roller 9 and vice versa, according to a sort of engagement scheme between the edge of toothed wheels, without however there being contact between the external surface 8a of the lower roller 8 and the external surface 9a of the upper roller 9.

Naturally, the expression "engagement without contact" does not refer to the sheets 1, which indeed certainly come into contact with the two rollers 8, 9 and, more particularly with the upper, each time, portion or section of the lower roller 8 and the lower, each time, portion or section of the upper roller 9.

In this regard, the sheet 1 can come into contact with the first protruding straight zones 8b, 9b and the second recessed straight zones 8c, 9c, but not with the sections or portions between them of the surfaces 8a, 9a or at least to an extent minor with the latter.

Clearly, by setting the rollers 8, 9 in rotation, all the different protruding zones 8b and all the second recessed zones 8c are sequentially brought, from time to time to the top of the lower roller 8 and are brought, from time to time, to the bottom of the top roller 9 all the recessed zones 9c and all the protruding zones 9b, so that during the advancement of a sheet 1 in the gap G1 following preferably the rotation of the rollers (in particular by controlling the rotation of the lower roller 8) the various portions of the sheet 1 that are found in a given time interval in the gap G1 will be treated or bent from time to time by the protruding zones 8b of the lower roller 8 and by the recessed zones 9c of the upper roller 9 and/or by the recessed zones 8c of the lower roller and from the protruding zones 9b of the upper roller 9 which define the gap G1 in that time interval.

Preferably, the first gap G1 comprises, although variable as a result of the rotation of the rollers 8, 9, a first straight section G1a and a second straight section G1b inclined with respect to the first straight section G1a. Basically, the first gap G1 can have a substantially V-shaped configuration.

More specifically, the two straight sections G1a, G1b are defined, on the one hand, between two adjacent first protruding zones 8b (with a second recessed zone 8c in the middle) or (depending on the rotation of the roller 8) between two second recessed zones 8c adjacent (with a second protruding zone 8b in the middle) and, on the other side between two adjacent second recessed zones 9c (with a second protruding zone 9b in the middle) or (depending on the rotation of the roller 9) between two first protruding zones 9b adjacent (with a second recessed zone 9c in the middle).

The width of the rollers 8, 9 can be greater or less than the width of the sheets 1 to be treated. In this regard, the sheets 1 could protrude laterally with respect to the rollers 8, 9, so that the sides of the sheets 1 would not be treated or shaped, or the rollers 8, 9 could protrude laterally with respect to the sheets 1, so that the sheets 1 would be treated across their entire width.

Clearly, the rollers 8, 9 could also have an external shaping surface 8a, 9a for the entire extension of their tubular surface or even only for part of it.

Preferably, the distance between the first adjacent and subsequent straight protruding zones 8b, 9b can be slightly greater than the distance between the first fold lines 2 which is to be obtained.

The same can apply to the distance between adjacent and subsequent second recessed straight zones 8c, 9c.

It will be understood that the difference between the maximum height or level of the first protruding zones 8b of the lower roller 8 and the minimum height or level of the first protruding zones 9b of the upper roller 9, also as a function of the feeding height of the sheet 1 in the first station 6, is such as to determine fold lines 2 by means of the first protruding zones 8b and/or the first protruding zones 9b.

Of course, the speed of rotation of the rollers, in particular of the drive roller, as well as the thickness of the sheet are also important.

The first station 6 of course comprises a support base 10 for the rotatable support of the lower roller 8 as well as columns or uprights 11 extending from the support base 10 and designed to rotatably support the upper roller 9.

In this regard, the support base 10 can have two zones defining a cradle or area 12a, 12b for rotatingly support, by means of suitable bearings 13a, 13b of respective tangs or hubs 8d, 9d protruding from respective sides of each roller 8, 9. Clearly, the rollers 8, 9 could each define a through seat where a respective shaft is fitted, which then protrudes from the sides of the rollers, a shaft which is then supported by the base 10.

On the other hand, one of the rollers, for example the lower roller 8, can be driven into rotation by means of a suitable electric motor or other motor, if desired with the interposition of suitable motion transmission means including for example gears, pulleys, belts and/or chains, which roller is designed to drag the sheets 1 at least in advance through the first station 6, while the other roller 9 can be idle supported, so that it is dragged in rotation by the sheet 1, in turn dragged by the lower roller 8. Alternatively, it could be considered to motorize the upper roller 9 or to drag the sheet 1 in a different way, which would determine the advancement of the rollers 8, 9.

In this regard, the lower roller 8 can be keyed or made integral with at least a lower first gear or toothed wheel 14, for example by keying or making the latter integral with the tip of a respective tang 8d of the lower roller 8.

The upper roller 9 can instead be keyed or made integral, for example by means of a special shrink disc 15, to at least a second gear or toothed wheel 16, in which the tip of a respective tang 9d of the upper roller 9 is mounted and then keyed or made integral.

The first station 6 can then be provided with means for lifting/lowering 17 of the upper roller 9 or of the lower roller 8, for example one or a pair of pneumatic, hydraulic or electric actuators 17a, which can be supported by respective support structures, for example rising from the base 10. In this regard, according to the non-limiting embodiment illustrated in the figures, two actuators 17a can be provided, each designed to lift a respective tang or hub 9d of the upper roller 9.

Clearly, the lifting / lowering means 17 may be necessary both during the assembly of the first station 6, and for its maintenance or even to adjust the distance between the rollers 8, 9 according to the thickness of the sheets 1 to be treated.

Advantageously, the first shaping station 6 also comprises means for eliminating or reducing 18 the play between the lower 8 and upper 9 rollers, in particular between the respective external shaping surfaces 8a, 9a.

In accordance with the specific embodiment illustrated in the figures, the means for eliminating or reducing 18 the play correspond to an auxiliary half gear or toothed wheel 18 which is fixed on a second gear or toothed wheel 16 so that the respective circumferential recesses and teeth 18a, 16a are slightly offset.

With reference to this aspect, a second gear or toothed wheel 16 has an annular body with circumferential teeth and recesses 16a, while the auxiliary half-gear 18 has a tubular body with an external diameter equal to that of the second gear or toothed wheel 16 and with circumferential teeth and recesses 18a at the same distance from the respective axis with respect to the teeth and recesses 16a of the second gear or toothed wheel 16.

On the other hand, the auxiliary half-gear 18 is mounted or fixed in abutment to the second gear or toothed wheel 16 so that respective side walls are abutting, with the respective axial openings aligned, but with the circumferential teeth and recesses 18a of the auxiliary half-gear 18 slightly offset with respect to the circumferential teeth and recesses 16a of the second gear or toothed wheel 16.

As it will be understood, this expedient would reduce the free space for the engagement of the recesses or teeth of a first gear 14, so that the play between the lower 8 and upper 9 rollers would be limited.

If desired, the second gear or toothed wheel 16 could also comprise a first section 16b defining recesses or teeth and a second outer section 16c with a smaller diameter without recesses or teeth and on which the auxiliary half-gear 18 can be mounted, which would define clearly an axial opening having an width corresponding to the external bulk of the second section 16c. One could clearly have a reverse configuration whereby the second gear 16 is mounted on the auxiliary half gear 18.

Moreover, in the second gear 16 two, three, four or more holes 19 could be delimited, for example threaded holes, while in the auxiliary half-gear 18 two, three, four or more slots 20 could be delimited, which, in use, are aligned each to a respective hole 19, then providing for the insertion of screws or pins for tightening and fixing the second gear 16 to the auxiliary half-gear 18.

As regards the second shaping station 7, it can comprise at least a second pair of rotating rollers 21, 22 each around a respective axis of rotation z-z, w-w, a lower one 21 and an upper one 22 between which the sheets can be fed. 1. The rollers 21, 22 are preferably arranged with an axis of rotation z-z, w-w orthogonal to the direction of advancement A-A of the sheets through the second station 6.

Clearly, these rollers 21, 22 could also be supported as described with reference to the rollers 8, 9 of the first station 6, also if desired with equivalent play elimination or reduction means.

Each of these rollers 21, 22 comprises an external shaping surface 21a, 22a tubular and knurled or toothed with knurls or teeth configured as circumferences coaxial to the axis z-z, w-w of the respective roller 21, 22. That is to say that the rollers 21, 22 have an external surface 21a, 22a whose distance from the axis z-z, w-w of the respective roller 21, 22 varies in the passage from one side of the roller to the other.

The side of the roller 21, 22 clearly means one of the two end parts of the respective tubular or cylindrical surface. According to the non-limiting embodiment example in the figures, the sides of the rollers are those from which respective tangs 21d, 22d protrude or a respective shaft protrudes.

Preferably, the external surface 21a of the lower roller 21 is substantially configured as the external surface 22a of the upper roller 22 and these surfaces have substantially corresponding dimensions.

Basically, the external surface 21a, 22a of each roller 21, 22 has, in the passage from one side to the other of the roller itself, protruding third zones 21b, 22b alternating with recessed fourth zones 21c, 22c.

The third zones 21b, 22b are in fact aligned along a third ideal cylinder which is at a distance greater from the respective axis z-z, w-w (or has a diameter greater with respect to the axis), while the fourth zones 21c, 22c are in fact aligned along an ideal fourth cylinder at a distance shorter from the axis of rotation z-z, w-w (or have a smaller diameter with respect to the axis). It will be noted that the third zones 21c, 22c and the fourth zones 21c, 22c are substantially circular or cylindrical or annular and coaxial to the axis of rotation z-z, w-w of the respective roller 21, 22.

If desired, the distance of the external surface 21a, 22a of each roller 21, 22 from the axis of rotation z-z, w-w of the same gradually decreases in the passage from each third zone 21b, 22b to the adjacent fourth straight zone 21b, 22c.

Basically, the external surface 21a, 22a of each roller 21, 22, starting from a third protruding zone 21b, 22b at one side of the respective roller and moving axially towards the other side, has a zone of gradual reduction of the distance from the z-z, w-w axis up to a fourth recessed zone 21c, 22c, then a zone of gradual increase in the distance from the axis z-z, w-w up to an adjacent third protruding zone 21b, 22b which will be followed by another zone of gradual reduction of the distance from the axis z-z, w-w and then another fourth zone in recess 21c, 22c and so on until reaching the other side of the roller 21, 22.

The two rollers 21 and 22 are positioned one 22 above the other with axes of rotation z-z, w-w parallel and preferably lying in the same vertical plane, with the top, each time, section of the lower roller 21 in engagement, preferably, without contact with a bottom, from time to time, section of the upper roller 22 so as to define a second gap or imprint G2 between them for the passage and dragging of the sheets to be shaped.

Clearly, the two rollers 21 and 22 are positioned or can be positioned so that by making them rotate (for example one motorized and the other idle or driven or, if desired, both motorized), the knurling or the teeth of the external surface 21a engage continuously, preferably without contact the knurling or teeth of the outer surface 22a. More specifically, during the rotation of the rollers 21, 22, an upper, in use, section of knurling of the outer surface 21a of the lower roller 21 is engaged, preferably without contact, with a lower, in use, knurling section of the external surface 22a of the upper roller 21 so as to suitably shape and fold a sheet which is fed between them.

With regard to the expression "engagement without contact", by the same it is meant that during rotation, each protruding zone of a lower roller 21 is inserted in an area defined by the bottom recessed zones of the upper roller 22 and vice versa, according to a sort of engagement scheme between the edge of toothed wheels, without however there being contact between the external surface 21a of the lower roller 21 and the external surface 22a of the upper roller 22.

Of course, also in this case the expression "engagement without contact" does not refer to the sheets 1, which indeed during the course certainly come into contact with the two rollers 21, 22 and, more particularly with the upper from time to time portion or section of the lower roller 21 and the lower from time to time portion or section of the upper roller 22.

Clearly, by setting the rollers 21, 22 in rotation, all the circumferential sections of the protruding zones 21b and of the second recessed zones 21c are brought each time to the top of the lower roller 21 in a sequential manner and are brought each time to the bottom of the upper roller 22 all the circumferential sections of the recessed zones 22c and of the protruding zones 22b, so that during the advancement of a sheet 1 in the gap G2 preferably following the rotation of the rollers (in particular by controlling the rotation of the lower roller 21) the various portions of the sheet 1 that are found in a given time interval in the gap G2 will be treated or fold from time to time by the sections of the protruding zones 21b of the lower roller 21 and of the recessed zones 22c of the upper roller 22 and from the sections of the recessed zones 21c of the lower roller and of the protruding zones 22b of the upper roller 22 which define the gap G2 in that time interval.

The gap G2 clearly has a width slightly greater than the thickness of the sheet 1.

Preferably, the second gap G2 comprises a sequence of substantially V-shaped sections from one side to the other, therefore with alternating concavity upwards and concavity downwards.

It will be understood how the difference between the maximum height or level of the third protruding zones 21b of the lower roller 21 and the minimum height or level of the third protruding zones 22b of the upper roller 22, also as a function of the feeding height of the sheet 1 in the second station 7, is such as to determine fold lines 3 by means of the third protruding zones 21b and/or the third protruding zones 22b.

Of course, the speed of rotation of the rollers, in particular of the drive roller, as well as the thickness of the sheet are also important.

The width of the rollers 21, 22 can be greater or less than the width of the sheets 1 to be treated.

Clearly, the rollers 21, 22 could also have an external shaping surface 21a, 22a for the entire extension of their tubular surface or even only for part of it.

Naturally, a line 5 according to the present invention can also comprise other known stations for sheet processing lines, such as sheet cutting stations, if desired downstream of the stations 6 and 7, or side shaping stations 1c, 1d, for example upstream of stations 6 and 7 or other suitable stations, such as those of constraint or application of a first layer to the sheet.

The line 5 can then be equipped with an electronic control unit, as well as a user interface and other standard components for sheet processing lines.

A subject-matter of the present patent right is also a method for working sheet 1, in particular by means of a line 5 according to the present invention.

This method first foresees to prepare at least one starting sheet to be treated, for example substantially flat FS at least at a main part of its extension (the sides 1c, 1d could also have been previously shaped and thus not flat) and then to pass said sheet in the first shaping station 6 or better between the respective rollers 8, 9 so as to fold the starting sheet FS and form on it first fold lines 2 which extend orthogonally to the direction of advancement A-A of the sheets in line 5, thereby obtaining a partially folded or shaped sheet.

As regards this step in detail, preferably, but not necessarily, the sheet 1 is fed between the rollers 8, 9 at a height or level substantially equal to the maximum height or level of the first protruding straight zones 8b of the lower roller 8, with the first protruding zones 9b of the upper roller 9 having a minimum height or level suitably lower than this maximum height or level and the height or feeding level of the sheet (or rather of the main extension of the sheet) in the first station 6.

Thanks to this expedient, the first fold lines 2 are in fact formed by the engagement of the sheet 1 by the first protruding straight zones 9b of the upper roller 9. In this regard, as will be understood a first protruding straight zone 8b of the lower roller 8 reaches its maximum height or level once the lower roller 8 is rotated so as to bring it to the highest point of the latter.

Alternatively, in this step the sheet 1 is fed between the rollers 8, 9 at a height or level substantially equal to the minimum height or level of the first protruding straight zones 9b of the upper roller 9, with the first protruding zones 8b of the roller lower 8 having a maximum height or level suitably higher than this minimum height or level and the height or feeding level of the sheet (or better of the main extension of the sheet) in the first station 6.

Subsequently, the partially folded or shaped sheet, i.e. with the first fold lines 2, is made to pass into the second shaping station 7 or better between respective rollers 21, 22 so as to further fold such sheet and form second fold lines 3 on it, which extend parallel to the direction of advancement A-A of the sheets 1 in the line 5, thereby obtaining a sheet 1 according to the present invention.

As regards this step in detail, preferably, but not necessarily, the sheet 1 is fed between the rollers 21, 22 at a height or level substantially equal to the minimum height or level of the third protruding zones 22b of the upper roller 22, with the third protruding zones 21b of the lower roller 21 having a maximum height or level suitably higher than this minimum height or level and the feeding height or level of the sheet (or better than the main extension of the sheet). Thanks to this arrangement, the second fold lines 3 are actually formed mainly by the engagement of the sheet 1 by the third protruding zones 21b of the lower roller 21.

Alternatively, in this step the sheet 1 is fed between the rollers 21, 22 at a height or level substantially equal to the maximum height or level of the third protruding zones 21b of the lower roller 21, with the third protruding zones 22b of the upper roller 22 having a minimum height or level suitably lower than this maximum height or level and the feeding height or level of the sheet (or rather the main extension of the sheet). Thanks to this arrangement, the second fold lines 3 are actually formed mainly by the engagement of the sheet 1 by the third protruding zones 22b of the upper roller 22.

As a result of the folding along the fold lines 2, 3, in the sheet parts 4 defined between two first adjacent and subsequent fold lines 2 and between two adjacent and subsequent second fold lines 3, a substantially pyramidal or polygon mesh-shaped configuration can be formed or determined, for example with vertex or vertex zone 4a substantially in the center of the respective sheet part 4.

In this regard, according to the non-limiting embodiment illustrated in the figures, by imparting to the sheet 4 fold lines or ribs 2 and 3, fold sections are practically automatically formed on the sheet 1, for example the fold sections 4b, 4c, 4d, 4e.

Subsequently, it is also possible to provide, upstream or downstream of the stations 6 and 7, a station for applying a first insulating layer on the thus obtained sheets 1 and/or a station for cutting and/or shaping the sides 1c, 1d.

In this regard, the step of applying the insulating layer can be carried out by pouring or applying polyurethane or other expandable component in the liquid state on one face of the sheets and then determining the expansion of the polyurethane or expandable component or leaving the polyurethane or expandable component to expand close to the sheet.

Alternatively, the first insulating layer can be made separately and then applied and adhered to the previously formed sheets 1.

As regards one or more cutting stations, advantageously a single sheet is fed into the line, which is then cut downstream of the stations 6 and 7 so as to obtain a plurality of sheet pieces in the same plant or even in a different plant. According to a less preferred variant, pre-cut sheet pieces are fed to the stations 6 and 7.

Naturally, a method for obtaining a sheet according to the present invention could also be carried out differently, for example manually or with stations provided with blades or in another suitable way.

It will be understood how thanks to the present invention it is possible to obtain sheets 1 with a particular finish with a series of fold lines or micro-ribs.

It has been appreciated that such a structure improves the mechanical performance of the sheets following folding or micro-ribbing.

In this regard, this structure improves, among other things, the adhesion of any layer of insulation, for example made of polyurethane foam or mineral wool.

Moreover, a sheet according to the present invention is also aesthetically pleasing, having a substantially diamond-coated configuration.

Changes and variants of the invention are possible within the scope defined by the claims.

## Claims

1. Cladding or covering metal sheet for roofs or walls, comprising an external face (1a) and an internal face (1b), wherein said sheet has a width (WD), a length (LN) and a thickness (TH), the width (WD) and the length (LN) being the main dimensions defining a main extension plane of the sheet, wherein the sheet comprises a plurality of first fold lines or ribs (2) spaced apart with respect to each other, each of which first fold lines or ribs (2) extends along a respective direction lying in a plane defined by the width (WD) and by the length (LN), and a plurality of second fold lines or ribs (3) spaced apart with respect to each other, each of the second fold lines or ribs (3) extending along a respective direction lying in said plane or in a plane parallel thereto, said second fold lines or ribs (3) being incident or intersecting said plurality of first fold lines or ribs (2), the first fold lines or ribs (2) defining a recessed area in the same face (1a) of the sheet and a protruding area in the other face (1b) of the sheet, and the second fold lines or ribs (3) defining a recessed area in the same face (1a) of the sheet and a protruding area in the other face (1b) of the sheet,
at least one part of sheet (4) defined between two adjacent and subsequent first fold lines or ribs (2) and between two adjacent and subsequent second fold lines or ribs (3) defining a recessed zone (RZ) in one face (1b) of the sheet and a protruding zone (PZ) in the other face (1a),
at least one part of sheet (4) defined between two adjacent and subsequent first fold lines or ribs (2) and between two adjacent and subsequent second fold lines or ribs (3) has a substantially pyramidal or polygon mesh shape,
wherein said sheet has a thickness between 0.3 and 1.2 mm,
**characterized in that**
the fold lines of at least one pair of adjacent and subsequent first fold lines or ribs (2) and/or of adjacent and subsequent second fold lines or ribs (3) are at a distance from each other between about 10 and about 20 mm or between about 40 and about 50 mm,
wherein said fold lines or ribs (2, 3) have a depth between 0.5 and 2 mm.

2. Sheet according to claim 1, wherein the first fold lines or ribs (2) are straight and parallel to each other and the second fold lines or ribs (3) are also straight and parallel to each other.

3. Sheet according to claim 2, wherein said first fold lines or ribs (2) are orthogonal to said second fold lines or ribs (3).

4. Sheet according to any of the preceding claims, having a thickness between 0.4 and 1 mm.

5. Sheet according to any of the preceding claims, wherein four fold sections (4b, 4c, 4d, 4e) are defined in said at least one part of sheet (4), each of said fold sections extends from the vertex or vertex zone (4a) of the respective sheet part (4) to a respective segment (2a, 3a) of a respective fold line or rib (2, 3) defining this sheet part (4).

6. Sheet according to any of the preceding claims, wherein the first lines of at least one pair of adjacent and subsequent first fold lines or ribs (2) are at a distance from each other between 5 and 100 mm.

7. Sheet according to any of the preceding claims, wherein the second lines of at least one pair of adjacent and subsequent second fold lines or ribs (3) are at a distance from each other between 5 and 100 mm.

8. Sheet according to any one of the preceding claims, wherein the distance between the adjacent and subsequent first fold lines or ribs (2) is substantially corresponding to the distance between the adjacent and subsequent second fold lines or ribs (3).

9. Sheet according to any one of the preceding claims, wherein said fold lines or ribs (2, 3) have a depth between 0.7-0.9 mm.

10. Sandwich panel with a first main support or insulating layer or block and at least one first metal sheet according to any one of the preceding claims applied or adhered to at least one face of the first main support layer.

11. Sheet processing line for obtaining a sheet according to any claim 1 to 9, comprising at least one first shaping station (6) arranged to deform the sheets so as to form on the latter first fold lines or ribs (2) which extend in whole or in part orthogonally to the direction of advancement (A-A) of the sheets in the line and at least one second shaping station (7) arranged to deform the sheets so as to form second fold lines or ribs (3) which extend in whole or in part parallel to the direction of advancement (A-A) of the sheets in the line.

12. Processing line according to claim 11, wherein said first shaping station (6) comprises a first pair of rollers (8, 9) mounted for rotation each around a respective axis of rotation (x-x, y-y), a lower roller (8) and an upper roller (9) between which the sheets can be fed, each of said rollers comprising an external shaping surface (8a, 9a) which is tubular and knurled or toothed with lines parallel to the axis (x-x, y-y) of the respective roller (8, 9), i.e. an external surface (8a, 9a) whose distance from the rotation axis (x-x, y-y) of the respective roller (8, 9) varies in the passage around the same axis of the roller (8 , 9).

13. Processing line according to claim 12, wherein the outer surface (8a, 9a) of each roller (8, 9) of the first station has, in the direction of rotation or passage around the axis (x-x, y-y) of the respective roller (8, 9), first protruding straight zones (8b, 9b) alternating with recessed second straight zones (8c, 9c),
said first straight zones (8b, 9b) being aligned along a first ideal cylinder which is at a distance greater from the axis (x-x, y-y), while the second straight zones (8c, 9c) are aligned along a second ideal cylinder at a distance shorter from the axis of rotation (x-x, y-y).

14. Processing line according to claim 13, wherein the distance of the outer surface (8a, 9a) of each roller (8, 9) from the axis of rotation (x-x, y-y) of the latter gradually decreases in the passage from each first straight zone (8b, 9b) to the adjacent second straight zone (8c, 9c).

15. Processing line according to claim 11, 12, 13 or 14, wherein the second shaping station (7) comprises a pair of rollers each rotatable around a respective axis of rotation (z-z, w-w), a lower roller (21) and an upper roller (22) between which the sheets can be fed, each of said rollers comprising an external shaping surface (21a, 22a) which is tubular and knurled or toothed with knurls or teeth configured as circumferences coaxial to the axis (z-z, w-w) of the respective roller (21, 22), i.e. an external surface (21a, 22a) whose distance from the axis (z-z, w-w) of the respective roller (21, 22) varies in the passage from one side to the other of the roller itself.

16. Line according to claim 15, wherein the external surface (21a, 22a) of each roller (21, 22) of said second shaping station (7) has, in the passage from one side of the roller to the other, third protruding zones (21b, 22b) alternated to fourth recessed zones (21c, 22c), said third zones (21b, 22b) and said fourth zones (21c, 22c) being substantially circular or cylindrical or annular and coaxial to the rotation axis (z-z, w-w) of the respective roller (21, 22).

17. Line according to claim 16, wherein said third zones (21b, 22b) are aligned along an ideal third cylinder which is at a distance greater from the axis (z-z, w-w) of the respective roller (21, 22), while the fourth zones (21c, 22c) are aligned along an ideal fourth cylinder at a distance shorter from the axis of rotation of the axis (z-z, w-w) of the respective roller (21, 22).

18. Method for processing sheets for obtaining sheets according to any claim 1 to 9, comprising the following steps:
- arranging at least one starting sheet to be treated and a line according to any one of claims 11 to 17,
- passing said at least one starting sheet to be treated in said first shaping station (6) of a line (5) so as to form on said at least one starting sheet to be treated first fold lines or ribs (2) which extend in whole or in part orthogonally to the direction of advancement (A-A) of the sheets in the line (5), and
- passing said at least one sheet with said first fold lines or ribs into said second shaping station (7) so as to form on said at least one sheet second fold lines or ribs (3) which extend in whole or in part parallel to the direction of advancement (A-A) of the sheets in the line (5).

19. Method according to claim 18, wherein owing to the folds along said fold lines or ribs (2, 3), in the sheet parts (4) defined between two adjacent and subsequent first fold lines or ribs (2) and between two adjacent and successive second fold lines or ribs (3) a substantially pyramidal or polygonal mesh shape is formed or determined.

## Patentansprüche

1. Verkleidungs- oder Abdeckungs-Metallblech für Dächer oder Wände, umfassend eine Außenseite (1a) und eine Innenseite (1b), worin das besagte Blech eine Breite (WD), eine Länge (LN) und eine Dicke (TH) aufweist, wobei die Breite (WD) und die Länge (LN) die Hauptabmessungen sind, die eine Haupterstreckungsebene des Blechs definieren, worin das Blech eine Vielzahl von ersten Falzlinien oder Rippen (2) umfasst, die voneinander beabstandet sind, wobei sich jede der ersten Falzlinien oder Rippen (2) entlang einer jeweiligen Richtung erstreckt, die in einer Ebene liegt, die durch die Breite (WD) und durch die Länge (LN) definiert ist, und eine Vielzahl von zweiten Falzlinien oder Rippen (3), die voneinander beabstandet sind, wobei sich jede der zweiten Falzlinien oder Rippen (3) entlang einer jeweiligen Richtung erstreckt, die in der besagten Ebene oder in einer dazu parallelen Ebene liegt, wobei die besagten zweiten Falzlinien oder Rippen (3) auf die besagte Mehrzahl von ersten Falzlinien oder Rippen (2) treffen oder diese schneiden, wobei die ersten Falzlinien oder Rippen (2) einen vertieften Bereich in der gleichen Seite (1a) des Blechs und einen vorstehenden Bereich in der anderen Seite (1b) des Blechs definieren, und die zweiten Falzlinien oder Rippen (3) einen vertieften Bereich in der gleichen Seite (1a) des Blechs und einen vorstehenden Bereich in der anderen Seite (1b) des Blechs definieren,
mindestens einen Teil des Blechs (4), der zwischen zwei angrenzenden und aufeinanderfolgenden ersten Falzlinien oder Rippen (2) und zwischen zwei angrenzenden und aufeinanderfolgenden zweiten Falzlinien oder Rippen (3) definiert ist, der eine vertiefte Zone (RZ) in einer Seite (1b) des Blechs und eine vorstehende Zone (PZ) in der anderen Seite (1a) definiert,
mindestens einen Teil des Blechs (4), der zwischen zwei angrenzenden und aufeinanderfolgenden ersten Falzlinien oder Rippen (2) und zwischen zwei angrenzenden und aufeinanderfolgenden zweiten Falzlinien oder Rippen (3) definiert ist, der eine im Wesentlichen pyramidale oder polygonale Maschenform aufweist,
worin das besagte Blech eine Dicke zwischen 0,3 und 1,2 mm aufweist, **dadurch gekennzeichnet, dass** die Falzlinien mindestens eines Paares von angrenzenden und aufeinanderfolgenden ersten Falzlinien oder Rippen (2) und/oder von angrenzenden und aufeinanderfolgenden zweiten Falzlinien oder Rippen (3) in einem Abstand zwischen etwa 10 und etwa 20 mm oder zwischen etwa 40 und etwa 50 mm voneinander liegen,
worin die besagten Falzlinien oder Rippen (2, 3) eine Tiefe zwischen 0,5 und 2 mm aufweisen.

2. Blech nach Anspruch 1, worin die ersten Falzlinien oder Rippen (2) gerade und parallel zueinander sind und die zweiten Falzlinien oder Rippen (3) ebenfalls gerade und parallel zueinander sind.

3. Blech nach Anspruch 2, worin die besagten ersten Falzlinien oder Rippen (2) orthogonal zu den besagten zweiten Falzlinien oder Rippen (3) sind.

4. Blech nach einem der vorangegangenen Ansprüche, die eine Dicke zwischen 0,4 und 1 mm aufweisen.

5. Blech nach einem der vorangegangenen Ansprüche, worin vier Falzabschnitte (4b, 4c, 4d, 4e) in dem besagten mindestens einen Teil des Blechs (4) definiert sind, wobei sich jeder der besagten Falzabschnitte vom Scheitel oder von der Scheitelzone (4a) des jeweiligen Blechteils (4) zu einem jeweiligen Segment (2a, 3a) einer jeweiligen Falzlinie oder Rippe (2, 3) erstreckt, der diesen Blechteil (4) definiert.

6. Blech nach einem der vorangegangenen Ansprüche, worin die ersten Linien des mindestens einen Paares von angrenzenden und aufeinanderfolgenden ersten Falzlinien oder Rippen (2) in einem Abstand zwischen 5 und 100 mm voneinander liegen.

7. Blech nach einem der vorangegangenen Ansprüche, worin die zweiten Linien des mindestens einen Paares von angrenzenden und aufeinanderfolgenden zweiten Falzlinien oder Rippen (3) in einem Abstand zwischen 5 und 100 mm voneinander liegen.

8. Blech nach irgendeinem der vorangegangenen Ansprüche, worin der Abstand zwischen den angrenzenden und aufeinanderfolgenden ersten Falzlinien oder Rippen (2) im Wesentlichen dem Abstand zwischen den angrenzenden und aufeinanderfolgenden zweiten Falzlinien oder Rippen (3) entspricht.

9. Blech nach irgendeinem der vorangegangenen Ansprüche, worin die besagten Falzlinien oder Rippen (2, 3) eine Tiefe zwischen 0,7 - 0,9 mm aufweisen.

10. Sandwichplatte mit einer ersten Hauptträger- oder Isolierschicht oder einem ersten Block und mindestens einem ersten Metallblech nach irgendeinem der vorangegangenen Ansprüche, die auf mindestens einer Seite der ersten Hauptträgerschicht aufgebracht oder angehaftet ist.

11. Blechbearbeitungslinie zur Erhaltung eines Blechs nach einem der Ansprüche 1 bis 9, umfassend mindestens eine erste Formgebungsstation (6), die so angeordnet ist, dass sie die Bleche verformt, um auf letzterer erste Falzlinien oder Rippen (2) zu bilden, die sich ganz oder teilweise orthogonal zur Vorschubrichtung (A-A) der Bleche in der Linie erstrecken, und mindestens eine zweite Formgebungsstation (7), die so angeordnet ist, dass sie die Bleche verformt, um zweite Falzlinien oder Rippen (3) zu bilden, die sich ganz oder teilweise parallel zur Vorschubrichtung (A-A) der Bleche in der Linie erstrecken.

12. Bearbeitungslinie nach Anspruch 11, worin die besagte erste Formgebungsstation (6) ein erstes Paar von Walzen (8, 9), jedes um eine jeweilige Drehachse (x-x, y-y) drehbar angebracht, eine untere Walze (8) und eine obere Walze (9) umfasst, zwischen denen die Bleche zugeführt werden können, wobei jede der besagten Walzen eine äußere Formgebungsoberfläche (8a, 9a) umfasst, die röhrenförmig und gerändelt oder gezahnt mit Linien parallel zur Achse (x-x, y-y) der jeweiligen Walze (8, 9) ist, d. h. eine äußere Oberfläche (8a, 9a), deren Abstand von der Drehachse (x-x, y-y) der jeweiligen Walze (8, 9) beim Durchgang um die gleiche Achse der Walze (8, 9) variiert.

13. Bearbeitungslinie nach Anspruch 12, worin die äußere Oberfläche (8a, 9a) jeder Walze (8, 9) der ersten Station in die Dreh- oder Durchgangsrichtung um die Achse (x-x, y-y) der jeweiligen Walze (8, 9) erste vorstehende gerade Zonen (8b, 9b) aufweist, die sich mit vertieften zweiten geraden Zonen (8c, 9c) abwechseln,
wobei die besagten ersten geraden Zonen (8b, 9b) entlang eines ersten idealen Zylinders ausgerichtet sind, der sich in einem größeren Abstand von der Achse (x-x, y-y) befindet, während die zweiten geraden Zonen (8c, 9c) entlang eines zweiten idealen Zylinders in einem kürzeren Abstand von der Drehachse (x-x, y-y) ausgerichtet sind.

14. Bearbeitungslinie nach Anspruch 13, worin der Abstand der äußeren Oberfläche (8a, 9a) jeder Walze (8, 9) von der Drehachse (x-x, y-y) der letzteren beim Durchgang von jeder ersten geraden Zone (8b, 9b) zur angrenzenden zweiten geraden Zone (8c, 9c) allmählich abnimmt.

15. Bearbeitungslinie nach Anspruch 11, 12, 13 oder 14, worin die zweite Formgebungsstation (7) ein Paar von Walzen, jedes drehbar um eine jeweilige Drehachse (z-z, w-w), eine untere Walze (21) und eine obere Walze (22) umfasst, zwischen denen die Bleche zugeführt werden können, wobei jede der besagten Walzen eine äußere Formgebungsoberfläche (21a, 22a) umfasst, die röhrenförmig und gerändelt oder gezahnt mit Rändelungen oder Zähnen ist, die als Umfänge koaxial zur Achse (z-z, w-w) der jeweiligen Walze (21, 22) konfiguriert sind, d. h. eine äußere Oberfläche (21a, 22a), deren Abstand von der Achse (z-z, w-w) der jeweiligen Walze (21, 22) beim Durchgang von einer Seite zur anderen der Walze selbst variiert.

16. Linie nach Anspruch 15, worin die äußere Oberfläche (21a, 22a) jeder Walze (21, 22) der besagten zweiten Formgebungsstation (7) beim Durchgang von einer Seite der Walze zur anderen dritte vorstehende Zonen (21b, 22b) aufweist, die sich mit vierten vertieften Zonen (21c, 22c) abwechseln, wobei die dritten Zonen (21b, 22b) und die besagten vierten Zonen (21c, 22c) im Wesentlichen kreisförmig oder zylindrisch oder ringförmig und koaxial zur Drehachse (z-z, w-w) der jeweiligen Walze (21, 22) sind.

17. Linie nach Anspruch 16, worin die besagten dritten Zonen (21b, 22b) entlang eines idealen dritten Zylinders ausgerichtet sind, der sich in einem größeren Abstand von der Achse (z-z, w-w) der jeweiligen Walze (21, 22) befindet, während die vierten Zonen (21c, 22c) entlang eines idealen vierten Zylinders in einem kürzeren Abstand von der Drehachse der Achse (z-z, w-w) der jeweiligen Walze (21, 22) ausgerichtet sind.

18. Verfahren zur Bearbeitung von Blechen zur Erhaltung von Blechen nach einem der Ansprüche 1 bis 9, umfassend die folgenden Schritte:
- Anordnen mindestens eines zu behandelnden Startblechs und einer Linie nach einem der Ansprüche 11 bis 17,
- Durchgang des besagten mindestens einen zu behandelnden Startblechs in der besagten ersten Formgebungsstation (6) einer Linie (5), um auf dem besagten mindestens einen zu behandelnden Startblech erste Falzlinien oder Rippen (2) zu bilden, die sich ganz oder teilweise orthogonal zur Vorschubrichtung (A-A) der Bleche in der Linie (5) erstrecken, und
- Durchgang des besagten mindestens einen Blechs mit den besagten ersten Falzlinien oder Rippen in der besagten zweite Formgebungsstation (7), um auf dem besagten mindestens einen Blech zweite Falzlinien oder Rippen (3) zu bilden, die sich ganz oder teilweise parallel zur Vorschubrichtung (A-A) der Bleche in der Linie (5) erstrecken.

19. Verfahren nach Anspruch 18, worin aufgrund der Falzungen entlang der besagten Falzlinien oder Rippen (2, 3) in den Blechteilen (4), die zwischen zwei angrenzenden und aufeinanderfolgenden ersten Falzlinien oder Rippen (2) und zwischen zwei angrenzenden und aufeinanderfolgenden zweiten Falzlinien oder Rippen (3) definiert sind, eine im Wesentlichen pyramidale oder polygonale Maschenform gebildet oder bestimmt wird.

## Revendications

1. Tôle métallique de revêtement ou de couverture pour toitures ou murs, comprenant une face extérieure (1a) et une face intérieure (1b), dans laquelle ladite tôle a une largeur (WD), une longueur (LN) et une épaisseur (TH), la largeur (WD) et la longueur (LN) étant les dimensions principales définissant un plan d'extension principal de la tôle, dans laquelle la tôle comprend une pluralité de premières lignes de pliage ou nervures (2) espacées les unes par rapport aux autres, chacune de ces premières lignes de pliage ou nervures (2) s'étend le long d'une direction respective située dans un plan défini par la largeur (WD) et par la longueur (LN), et une pluralité de deuxièmes lignes de pliage ou nervures (3) espacées les unes des autres, chacune des deuxièmes lignes de pliage ou nervures (3) s'étendant le long d'une direction respective située dans ledit plan ou dans un plan parallèle à celui-ci, lesdites deuxièmes lignes de pliage ou nervures (3) étant incidentes ou coupant ladite pluralité de premières lignes de pliage ou nervures (2), les premières lignes de pliage ou nervures (2) définissant une zone renfoncée dans la même face (1a) de la tôle et une zone saillante dans l'autre face (1b) de la tôle, et les deuxièmes lignes de pliage ou nervures (3) définissant une zone renfoncée sur la même face (1a) de la tôle et une zone saillante sur l'autre face (1b) de la tôle,
au moins une partie de la tôle (4) définie entre deux premières lignes de pliage ou nervures (2) adjacentes et successives et entre deux deuxièmes lignes de pliage ou nervures (3) adjacentes et successives définissant une zone renfoncée (RZ) sur une face (1b) de la tôle et une zone saillante (PZ) sur l'autre face (1a),
au moins une partie de la tôle (4) définie entre deux premières lignes de pliage ou nervures (2) adjacentes et successives et entre deux deuxièmes lignes de pliage ou nervures (3) adjacentes et successives a une forme de maillage sensiblement pyramidale ou polygonale,
dans laquelle ladite tôle a une épaisseur comprise entre 0,3 et 1,2 mm, **caractérisée en ce que** les lignes de pliage d'au moins une paire de premières lignes de pliage ou nervures (2) adjacentes et successives et/ou de deuxièmes lignes de pliage ou nervures (3) adjacentes et successives sont à une distance comprise entre 10 et 20 mm environ ou entre 40 et 50 mm environ,
dans laquelle lesdites lignes de pliage ou nervures (2, 3) ont une profondeur comprise entre 0,5 et 2 mm.

2. Tôle selon la revendication 1, dans laquelle les premières lignes de pliage ou nervures (2) sont droites et parallèles les unes aux autres et les deuxièmes lignes de pliage ou nervures (3) sont également droites et parallèles les unes aux autres.

3. Tôle selon la revendication 2, dans laquelle lesdites premières lignes de pliage ou nervures (2) sont orthogonales auxdites deuxièmes lignes de pliage ou nervures (3).

4. Tôle selon l'une quelconque des revendications précédentes, ayant une épaisseur comprise entre 0,4 et 1 mm.

5. Tôle selon l'une quelconque des revendications précédentes, dans laquelle quatre sections de pliage (4b, 4c, 4d, 4e) sont définies dans ladite au moins une partie de la tôle (4), chacune desdites sections de pliage s'étend du sommet ou de la zone de sommet (4a) de la partie de tôle respective (4) à un segment respectif (2a, 3a) d'une ligne de pliage ou nervure (2, 3) respective définissant cette partie de la tôle (4).

6. Tôle selon l'une quelconque des revendications précédentes, dans laquelle les premières lignes d'au moins une paire de premières lignes de pliage ou nervures (2) adjacentes et suivantes se trouvent à une distance comprise entre 5 et 100 mm l'une de l'autre.

7. Tôle selon l'une quelconque des revendications précédentes, dans laquelle les deuxièmes lignes d'au moins une paire de deuxièmes lignes de pliage ou nervures (3) adjacentes et successives sont à une distance comprise entre 5 et 100 mm.

8. Tôle selon l'une quelconque des revendications précédentes, dans laquelle la distance entre les premières lignes de pliage ou nervures (2) adjacentes et suivantes correspond sensiblement à la distance entre les deuxièmes lignes de pliage ou nervures (3) adjacentes et successives.

9. Tôle selon l'une quelconque des revendications précédentes, dans laquelle lesdites lignes de pliage ou nervures (2, 3) ont une profondeur comprise entre 0,7 et 0,9 mm.

10. Panneau sandwich comportant un premier support principal ou une couche ou un bloc d'isolation et au moins une première tôle métallique selon l'une quelconque des revendications précédentes, appliquée ou adhérée sur au moins une face de la première couche de support principale.

11. Ligne de traitement de tôles pour l'obtention d'une tôle selon l'une quelconque des revendications 1 à 9, comprenant au moins une première station de façonnage (6) agencée pour déformer les tôles de manière à former sur ces dernières des premières lignes de pliage ou nervures (2) qui s'étendent en tout ou en partie orthogonalement à la direction d'avancement (A-A) des tôles dans la ligne et au moins une deuxième station de façonnage (7) agencée pour déformer les tôles de manière à former des deuxièmes lignes de pliage ou nervures (3) qui s'étendent en tout ou en partie parallèlement à la direction d'avancement (A-A) des tôles dans la ligne.

12. Ligne de traitement selon la revendication 11, dans laquelle ladite première station de façonnage (6) comprend une première paire de rouleaux (8, 9) montés pour tourner chacun autour d'un axe de rotation respectif (x-x, y-y), un rouleau inférieur (8) et un rouleau supérieur (9) entre lesquels les tôles peuvent être alimentées, chacun desdits rouleaux comprenant une surface de façonnage externe (8a, 9a) tubulaire et moletée ou dentée avec des lignes parallèles à l'axe (x-x, y-y) du rouleau respectif (8, 9), c'est-à-dire une surface externe (8a, 9a) dont la distance par rapport à l'axe de rotation (x-x, y-y) du rouleau respectif (8, 9) varie dans le passage autour du même axe du rouleau (8, 9).

13. Ligne de traitement selon la revendication 12, dans laquelle la surface extérieure (8a, 9a) de chaque rouleau (8, 9) de la première station présente, dans le sens de rotation ou de passage autour de l'axe (x-x, y-y) du rouleau respectif (8, 9), des premières zones droites saillantes (8b, 9b) alternant avec des deuxièmes zones droites renfoncées (8c, 9c),
lesdites premières zones droites (8b, 9b) étant alignées le long d'un premier cylindre idéal qui se trouve à une distance supérieure à l'axe (x-x, y-y), tandis que les deuxièmes zones droites (8c, 9c) sont alignées le long d'un deuxième cylindre idéal à une distance plus courte de l'axe de rotation (x-x, y-y).

14. Ligne de traitement selon la revendication 13, dans laquelle la distance de la surface extérieure (8a, 9a) de chaque rouleau (8, 9) par rapport à l'axe de rotation (x-x, y-y) de ce dernier diminue progressivement dans le passage de chaque première zone droite (8b, 9b) à la deuxième zone droite adjacente (8c, 9c).

15. Ligne de traitement selon la revendication 11, 12, 13 ou 14, dans laquelle la deuxième station de façonnage (7) comprend une paire de rouleaux pouvant chacun tourner autour d'un axe de rotation respectif (z-z, w-w), un rouleau inférieur (21) et un rouleau supérieur (22) entre lesquels les tôles peuvent être alimentées, chacun desdits rouleaux comprenant une surface de façonnage externe (21a, 22a) tubulaire et moletée ou dentée avec des molettes ou des dents configurées comme des circonférences coaxiales à l'axe (z-z, w-w) du rouleau respectif (21, 22), c'est-à-dire une surface externe (21a, 22a) dont la distance par rapport à l'axe (z-z, w-w) du rouleau respectif (21, 22) varie dans le passage d'un côté à l'autre du rouleau lui-même.

16. Ligne selon la revendication 15, dans laquelle la surface externe (21a, 22a) de chaque rouleau (21, 22) de ladite deuxième station de façonnage (7) présente, dans le passage d'un côté à l'autre du rouleau, des troisièmes zones saillantes (21b, 22b) alternées avec des quatrièmes zones renfoncées (21c, 22c), lesdites troisièmes zones (21b, 22b) et lesdites quatrièmes zones (21c, 22c) étant sensiblement circulaires ou cylindriques ou annulaires et coaxiales à l'axe de rotation (z-z, w-w) du rouleau respectif (21, 22).

17. Ligne selon la revendication 16, dans laquelle lesdites troisièmes zones (21b, 22b) sont alignées le long d'un troisième cylindre idéal qui se trouve à une distance plus grande de l'axe (z-z, w-w) du rouleau respectif (21, 22), tandis que les quatrièmes zones (21c, 22c) sont alignées le long d'un quatrième cylindre idéal à une distance plus courte de l'axe de rotation de l'axe (z-z, W-W) du rouleau respectif (21, 22).

18. Procédé de traitement de tôles pour l'obtention de tôles selon l'une quelconque des revendications 1 à 9, comprenant les étapes suivantes :
- disposer au moins une tôle de départ à traiter et une ligne selon l'une quelconque des revendications 11 à 17,
- passer au moins une tôle de départ à traiter dans ladite première station de façonnage (6) d'une ligne (5) de manière à former sur ladite au moins une tôle de départ à traiter des premières lignes de pliage ou nervures (2) qui s'étendent en tout ou en partie orthogonalement à la direction d'avancement (A-A) des tôles dans la ligne (5), et
- passer au moins une tôle avec lesdites premières lignes de pliage ou nervures dans ladite deuxième station de façonnage (7) de manière à former sur ladite au moins une tôle des deuxièmes lignes de pliage ou nervures (3) qui s'étendent en tout ou en partie parallèlement à la direction d'avancement (A-A) des tôles dans la ligne (5).

19. Procédé selon la revendication 18, dans lequel, en raison des plis le long desdites lignes de pliage ou nervures (2, 3), dans les parties de tôle (4) définies entre deux premières lignes de pliage ou nervures (2) adjacentes et successives et entre deux deuxièmes lignes de pliage ou nervures (3) adjacentes et successives, une forme de maille sensiblement pyramidale ou polygonale est formée ou déterminée.
